Europäisches Patentamt

European Patent Office

Office européen des brevets

(19)

(11) Publication number: **0 048 534**
**B1**

(12) **EUROPEAN PATENT SPECIFICATION**

(45) Date of publication of patent specification: **15.08.84**

(51) Int. Cl.³: **B 60 P 1/16**

(21) Application number: **81301345.5**

(22) Date of filing: **27.03.81**

(54) Vehicle control apparatus.

(30) Priority: **25.09.80 GB 8030905**

(43) Date of publication of application:
**31.03.82 Bulletin 82/13**

(45) Publication of the grant of the patent:
**15.08.84 Bulletin 84/33**

(84) Designated Contracting States:
**AT BE CH DE FR GB IT LI LU NL SE**

(56) References cited:
**FR - A - 1 198 106**
**US - A - 2 887 672**
**US - A - 3 735 346**
**US - A - 3 921 128**

(73) Proprietor: **OGDEN ELECTRONICS LTD.**
**c/o The Ogden Group of Companies**
**Otley Yorkshire (GB)**

(72) Inventor: **Steel, James**
**Cairn House Farm**
**Dalton Newcastle Upon Tyne (GB)**

(74) Representative: **Gordon, Richard John Albert et al,**
**F.J. CLEVELAND & COMPANY 40-43, Chancery**
**Lane**
**London WC2A 1JQ (GB)**

Courier Press, Leamington Spa, England.

## Description

This invention relates to control apparatus for controlling movement of a vehicle having a tiltable container.

In the mining and construction industries, extensive use is made of heavy plant and, particularly, large dump trucks. A typical dump truck is a vehicle having a tiltable container capable of carrying a load of up to 85 tonnes. The container is pivotable on an axis extending transversely of a rear end portion of the truck and is adapted to be pivoted on the axis so that a load contained in the container can be tipped rearwardly of the truck and deposited on ground to the rear of the truck. In order to carry such large loads, the container is of large dimensions and mass.

In use, there is a tendency for drivers to drive such trucks forwardly after a load has been deposited from a container of such a truck and with a central longitudinal axis of the container still in an upwardly inclined forward direction compared with a wheelbase of the truck. Such practice on the part of the drivers is discouraged because the elevated mass of the container causes stress on the pivot connection between the container and the body of the truck and also causes instability of the truck during forward motion thereof. Furthermore, the forward upper surface of the container, when the container is in a raised position, extends for a considerable height above a driver's cab of the truck and there is a danger that the forward surface of the container may strike an object, such as an overhead structure, during movement of the truck relative to the object.

In order to discourage drivers from driving trucks with a container in an upwardly inclined forward position, safety systems have been proposed whereby the driver is warned when the tiltable container has moved from a rest position to an inclined position. In US—A—3 921 128, for example, there is described and illustrated a switch unit which includes a solenoid which is energised if the tiltable container of a truck is raised while the truck carrying the container is at a dangerous angle. The effect of energisation of the solenoid is such that a valve is actuated by the solenoid whereby a warning signal device is operated and a by-pass circuit between a hoist cylinder and an oil reservoir is opened permitting oil to flow from the cylinder and lower the container to alleviate the danger.

Automatic systems have been proposed which relieve drivers of certain responsibilities. In FR—A—1 198 106, for example, there is described and illustrated a switch included in an electrical circuit which controls operation of a ram of a working cylinder operation of which effects pivotal movement of a tiltable container of a truck. The arrangement is such that the switch is operated when the container is pivoted to a fully raised position with the result that the working cylinder is controlled so as to draw the ram inwardly of the cylinder. The principal object of the mechanism disclosed in FR—A—1 198 106 is to reduce the time required for unloading a dump truck.

When trucks having tiltable containers deposit a load, there is a build-up of the load on ground to the rear of a truck as the load is being deposited thereon which tends to block progress of final portions of the load from the container. It is general practice to drive the truck forwardly with the container still in a raised position so that the rear of the container is moved clear of the load and the final portions of the load still in the container issue from the container. While such practice is acceptable if carried out before a short predetermined period, for the reasons stated above it is not acceptable if continued after the period.

It is necessary therefore to provide a solution to the problem of providing an automatic safety system wherein motion of a vehicle is arrested after a predetermined period if the tiltable container is not returned to a rest position and yet wherein the motion can be arrested during the period by manual control.

It is known to provide a vehicle having a tiltable container which is normally in a rest position with a device for generating a control output when the container is moved from the rest position in accordance with the preamble of the appended claim, see, for example, US—A—2 887 672). It is also known to provide a device which is connected to respond to a control output (see, for example, US—A—3 921 128 and FR—A—1 198 106). Furthermore, it is known to provide a vehicle with a time delayed control system for operating the brakes of the vehicle (see, for example, US—A—3 735 346). It is also common general knowledge to provide a vehicle with a gear selection mechanism for effecting motion of the vehicle.

However, all known proposals have not been addressed to the problem referred to above and do not provide a solution to the problem.

The disclosure in US—A—2 887 672 is of a switch which detects when a tiltable container of a truck has moved from a rest position and provides a visual indication of such by illumination of an indicating lamp. The disclosure in US—A—3 735 346 is of a security system for a vehicle whereby, after initiation of an alert signal, the brakes are automatically operated after a predetermined interval. There is no disclosure in US—A—3 735 346 of any means for manual intervention during the predetermined interval for arresting motion of a vehicle.

The present invention as defined in the claim solves the problem referred to above.

In this manner, the vehicle can move for a predetermined interval after the container has moved from the rest position thereby ensuring that a rear portion of the container is moved clear of an initial portion of the load deposited from the container to the rear of the vehicle and permitting a final portion of the load to slide

2

downwardly of the raised container so as to be deposited with the initial portion of the load.

Following is a description, by way of example only and with reference to the accompanying drawings, of one method of carrying the invention into effect.

In the drawings:—

Figure 1 is a diagrammatic representation of apparatus in accordance with the present invention carried on a dump truck, the apparatus shown in a condition when the truck is stationary and a skip of the truck, is being pivoted from a 'rest' position to deposit a load contained therein,

Figure 2 is a view similar to Figure 1 but with the apparatus shown in a condition when the truck is driven forwardly with the skip pivoted from the 'rest' position and,

Figure 3 is a view similar to Figure 1 and 2 but with the apparatus shown in a condition when the truck is driven forwardly with the skip lowered to the 'rest' position.

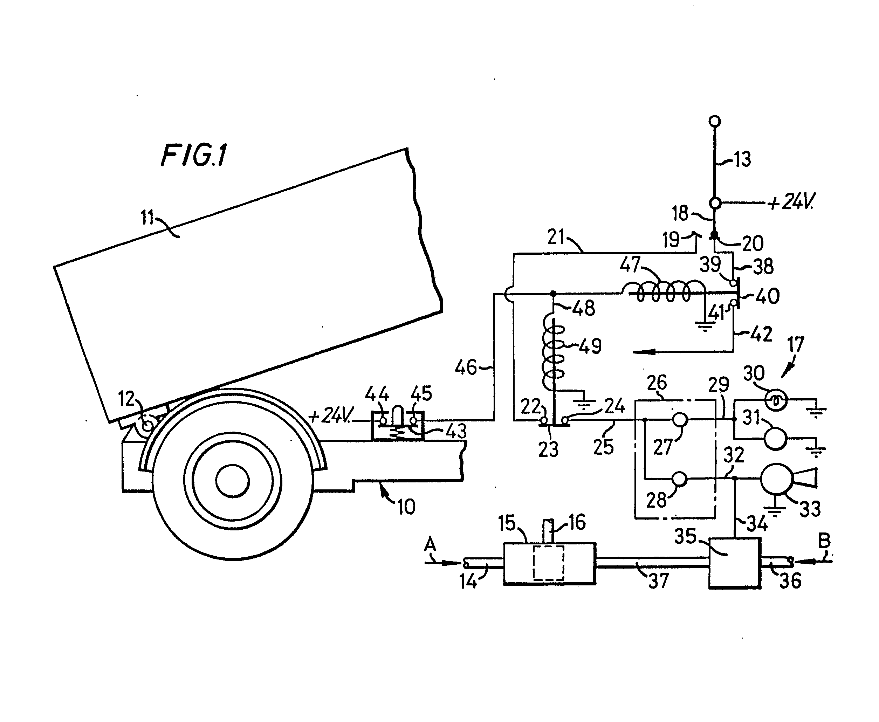

Referring now to Figure 1 of the drawings, there is shown a portion of a dump truck 10 having a skip 11 pivotable on an axis 12 extending transversely of a rear portion of the truck to deposit a load contained therein. The truck 10 is provided with a gear lever 13 for selecting gears from a gear box (not shown) of the truck. The truck 10 is provided with a brake system (not shown) controlled by air pressure which is supplied through a conduit 14 in the direction of arrow A, an inlet of a slide valve 15, an outlet of the slide valve 15 and a conduit 16, the conduit 16 directing air from the slide valve 15 to the brake system.

The dump truck 10 is provided with apparatus 17 for restraining movement of the truck 10 beyond a predetermined distance when driven forwardly with the skip 11 pivoted from a 'rest' position in which a central longitudinal axis of the skip extends substantially parallel to a wheelbase of the truck. The apparatus comprises an electrical circuit including a switch 18 connected to a +24 volt supply and operable by the gear lever 13, the switch having terminals 19, 20. The terminal 19 is connected by a line 21 to a terminal 22 of a switch contact 23 the other terminal 24 of which is connected by a line 25 to a timing unit 26 including timers 27 and 28 connected in parallel one with another and the timers 27, 28 being supplied by the line 25. The timer 27 is connected by a line 29 to a 'stop' lamp 30 which is earthed. The stop lamp 30 is connected in parallel with a buzzer 31 which is also earthed. The timer 28 is connected by a line 32 to a siren 33 which is earthed. The line 32 is tapped by a line 34 which is connected to a terminal of an electrically operable valve 35. The valve 35 has received in an inlet thereof an end portion of a conduit 36 for supplying therethrough in the direction of the arrow B air from the vehicle brake system. An output of the valve 35 is connected to a second input of the slide valve 15 by means of a conduit 37.

The terminal 20 of the switch 18 is connected by a line 38 to a terminal 39 of a switch contact 40, a second terminal 41 of which is connected by a line 42 to transmission apparatus (not shown) effecting control of pivoting of the skip 11 on the axis 12.

The truck 10 has mounted thereon a resiliently biased switch 43, a terminal 44 of which is connected to a +24 volt supply and a second terminal 45 of which is connected by a line 46 to a coil of a solenoid 47, the armature of which operates the switch contact 40, the coil being earthed. The line 46 is tapped by a line 48 which is connected to a coil of a solenoid 49, the armature of which operates the switch contact 23. The arrangement of the switch 43 is such that, when the skip 11 is in a 'rest' position, the skip engages the switch 43 urging the switch against the resilient bias to an open condition. When however, the skip is pivoted from the 'rest' position, the switch 43 is released and is urged by the resilient bias to a closed position causing a voltage surge through the coils of the solenoids 47, 49 thereby energising the solenoids resulting in closing of the switch contacts 23, 40.

In operation, the truck having a load contained in the skip 11 is reversed to a location at which the load is to be deposited. At the location, the brakes of the vehicle are applied and the gear lever 13 is moved to a 'neutral' position. In the 'neutral' position of the gear lever 13, the switch 18 is located in contact with the terminal 20. When power is transmitted to a transmission for elevating the skip 11, i.e. pivoting the skip rearwardly in an anticlockwise direction of Figure 1 on the pivot axis 12, downward force on the switch 43 applied by the skip against the resilient bias of the switch is released and the switch is urged by the resilient bias into contact with the terminals 44, 45 causing a voltage surge through the solenoids 47, 48 resulting in energisation of the solenoids and in closing of the switch contacts 23, 40. In consequence, the voltage is directed through the lines 38 and 42 to the transmission apparatus for supplying auxiliary power to a lift mechanism for the skip. The skip thus pivots in a rearward direction of the vehicle on the axis 12, as shown in Figure 1, to an elevated position in which a central longitudinal axis of the skip is inclined upwardly and forwardly from the axis 12.

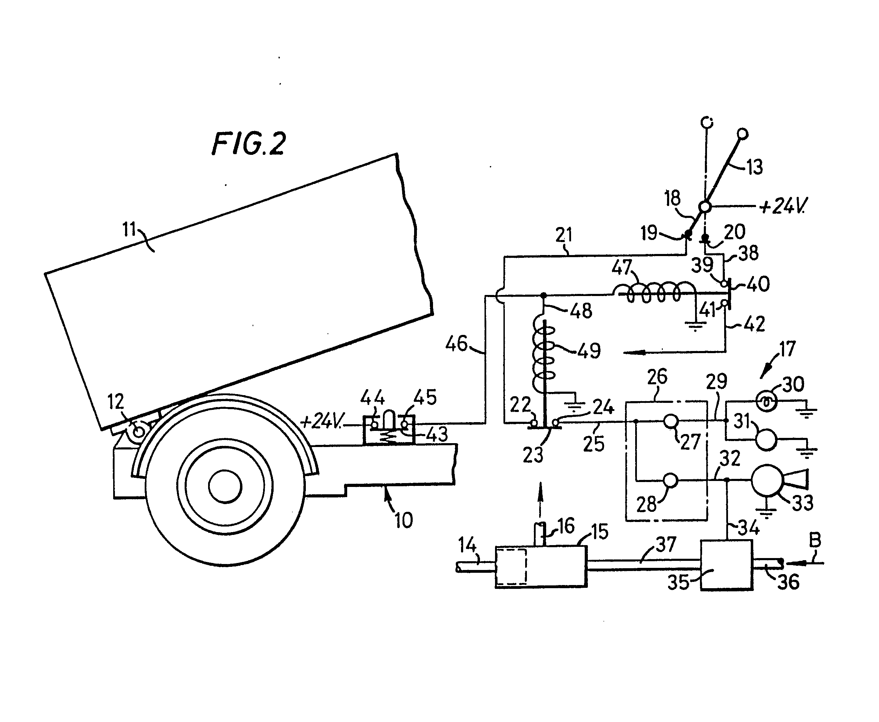

If, after depositing the load from the skip 11, the vehicle is driven forwardly with the skip remaining in an elevated position, the gear lever 13 would have been moved forwardly causing the switch 18 to move from engagement with the terminal 20 to engagement with the terminal 19, the switch 43 still connecting the terminals 44, 45. The condition would then be as shown in Figure 2 wherein a voltage is directed through the line 21, the contact switch 23 and the line 25 to the timers 27, 28. The timer 27 delays transmission of the voltage from the line 25 to the line 29 for eight seconds. If, therefore, within a period of eight seconds a driver of the vehicle applies the brakes of the vehicle and moves the gear lever 13 to a 'neutral' position thereby moving the switch 18 from engagement with the terminal 19 and cutting off supply of voltage to the timer 27, no further action occurs regarding the timers 27, 28. If however, after eight seconds the vehicle is still driven forwardly, the voltage on line 25 is transmitted to line 29 causing the 'stop' lamp 30 to illuminate and the buzzer 31 to sound. If the driver takes no further action to arrest movement of the vehicle in a forward direction, after thirteen seconds the voltage applied to line 25 is transmitted to line 32 causing the siren 33 to sound and voltage to be applied to the valve 35 thereby opening the valve and permitting air at 90% of the total force of air supplied by a source of the brake system of the vehicle to be directed through the conduit 37 causing the slide valve 15 to operate and the air under pressure to be directed through the conduit 16 to the brakes of the vehicle. In consequence, the brakes are operated and the vehicle is retarded.

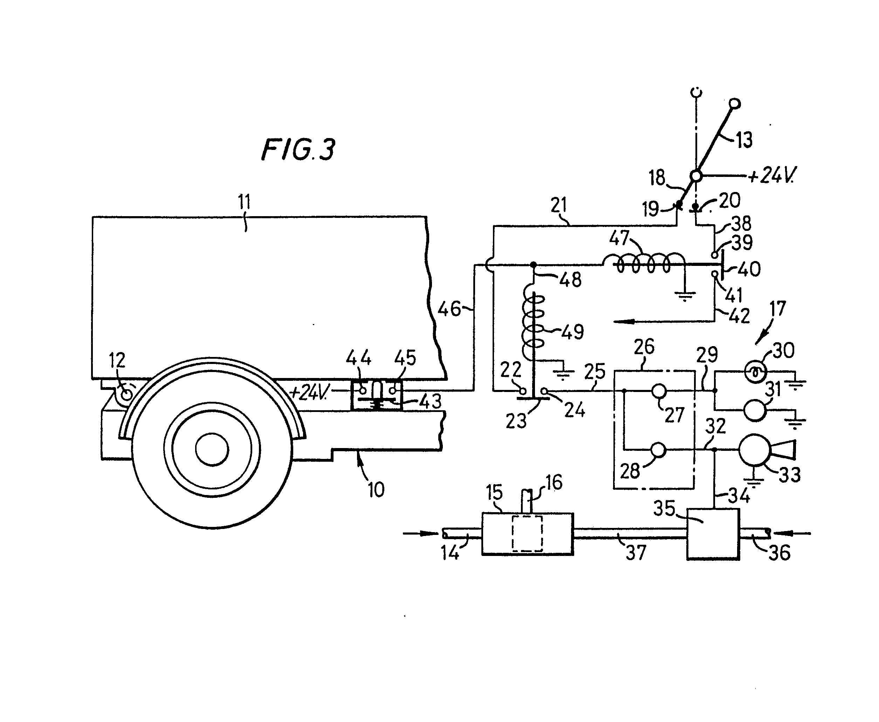

If the skip 11 is lowered to 'rest' position, it will engage the switch 43 and urge the switch against the resilient bias causing disconnection of the terminals 44, 45 and cut off supply of voltage of the solenoids 47, 48 thereby opening the switch contacts 23, 40. In consequence, power to the transmission apparatus through the line 42 is cut off and voltage supply to the line 25 also is cut off thereby inhibiting operation of the valve 35 and supply of air through the conduit 37 to the slide valve 15. The condition is then as shown in Figure 3.

It will be appreciated, therefore, that with apparatus in accordance with the present invention, a driver of a vehicle, when driving the vehicle forwardly with the skip 11 in an elevated position, is permitted to so drive the vehicle for a short distance, i.e. the distance travelled by the vehicle in up to eight seconds, thereby permitting the vehicle to move clear of the load deposited to the rear thereof while the skip is returned to a 'rest' position. If, however, the vehicle is driven forwardly with the skip raised for a period of eight seconds, the 'stop' lamp 30 is illuminated and the buzzer 31 is sounded. The driver thereby is warned that the vehicle has been driven forwardly for the permitted distance with the skip raised. If however, the driver persists in driving the vehicle forwardly after eight seconds with the skip raised, the siren 33 is sounded and the vehicle automatically is retarded by operation of the brake system due to the operation of the valve 35.

## Claim

Apparatus (17) for controlling operation of a brake control device (35) of a vehicle (10) having a tiltable container (11) which container (11) is normally in a predetermined rest position and which vehicle (10) has a gear selection mechanism (13) for effecting motion of the vehicle (10), the apparatus comprising a device (43) for generating a control output when the container (11) has moved from the rest position characterised in that the brake control device (35) is connected to respond at a delayed interval determined by a timing control means (28) to the control output when the gear selection mechanism (13) is at a location selecting a gear for effecting motion of the truck (10) whereby, if the gear remains engaged subsequent to the interval after the control output is generated, the brake control device (35) is actuated.

## Patentanspruch

Einrichtung (17) zum Steuern des Betriebs einer Bremssteuervorrichtung (35) eines Fahrzeugs (10), das einen schwenkbaren Behälter (11) hat, der normalerweise in einer vorbestimmten Ruhestellung ist und wobei das Fahrzeug (10) einen Gangwahlmechanismus (13) zum Bewirken einer Bewegung des Fahrzeugs (10) hat, wobei die Einrichtung eine Vorrichtung (43) zum Erzeugen eines Kontrolausgabesignals, wenn sich der Behälter (11) aus der Ruhestellung bewegt hat, umfaßt, dadurch gekennzeichnet, daß die Bremssteuervorrichtung (35) gekoppelt ist, um nach einem durch eine Zeitkontrolleinrichtung (28) bestimmten Verzögerungsintervall auf das Kontrollausgabesignal anzusprechen, wenn der Gangwahlmechanismus (13) in einer Stellung ist, in welcher ein Gang zum Bewirken einer Bewegung des Lastkraftwagens (10) gewählt ist, wodurch, wenn nach dem Intervall der Gang eingelegt bleibt, nachdem das Kontrollausgabesignal erzeugt worden ist, die Bremssteuervorrichtung (35) betätigt wird.

## Revendication

Appareil (17) destiné à contrôler le fonctionnement d'un dispositif de commande de freins (35) d'un véhicule (10) comportant une benne basculante (11) qui se trouve normalement dans une position de repos prédeterminée, le véhicule (10) comportant un mécanisme de sélection de vitesse (13) utilisé pour mettre le véhicule (10) en mouvement, l'appareil comprenant un dispositif (43) destiné à produire un signal de sortie de contrôle lorsque la benne (11) s'est écartée de sa position de repos, caractérisé en ce que le dispositif de commande de freins (35) est connecté de manière à réagir à un intervalle de retard déterminé par un dispositif de contrôle à minuterie (28) au signal de sortie de contrôle lorsque le mécanisme de sélection de vitesse (13) est dans une position de sélection d'une vitesse d'avancement du camion (10) de sorte que, si la vitesse reste sélectionnée après l'intervalle déterminé suivant la production du signal de sortie de contrôle, le dispositif de commande des freins (35) est actionné.

FIG.1

0 048 534

FIG.2

FIG.3

0 048 534